# EUROPEAN PATENT SPECIFICATION

(11) **EP 4 250 467 B1**
(45) Date of publication and mention of the grant of the patent: **07.10.2026**
(21) Application number: 21895103.6
(22) Date of filing: 17.11.2021
(51) Int. Cl.: H01M 50/543, H01M 50/116, H01M 50/172, H01M 50/183, H01M 50/105, H01M 50/178, H01M 50/14, H01M 50/186, H01M 50/19

(54) **SECONDARY BATTERY AND METHOD FOR MANUFACTURING THE SAME**
SEKUNDÄRBATTERIE UND HERSTELLUNGSVERFAHREN DAFÜR
BATTERIE SECONDAIRE ET SON PROCÉDÉ DE FABRICATION

(30) Priority: 18.11.2020 KR 20200154998
(43) Date of publication of application: 27.09.2023
(73) Proprietor: LG Energy Solution, Ltd., Seoul 07335 (KR)
(72) Inventor: KIM, Shin Chul, Daejeon 34122 (KR); NA, Seung Ho, Daejeon 34122 (KR); PARK, Sung Chul, Daejeon 34122 (KR)
(74) Representative: Goddar, Heinz J.
(86) International application number: PCT/KR2021/016907
(87) International publication number: WO 2022/108335

(56) References cited:
- KR-A- 20110 030 395
- KR-A- 20120 063 236
- KR-A- 20160 134 331
- KR-A- 20170 013 809
- KR-A- 20170 020 996
- KR-B1- 101 308 242
- KR-B1- 102 051 930
- US-A1- 2011 064 991
- US-B2- 10 700 324

## Description

### CROSS-REFERENCE TO RELATED APPLICATION

The present application claims the benefit of the priority of Korean Patent Application No. 10-2020-0154998, filed on November 18, 2020.

### TECHNICAL FIELD

The present invention relates to a secondary battery as defined in claim 1 and a method for manufacturing the same as defined in claim 6, and more particularly, to a secondary battery, in which an expansion part is formed at a portion of a pouch, from which a lead protrudes, to increase in sealing area, thereby improving sealing performance, and a method for manufacturing the same.

### BACKGROUND ART

The demand for secondary batteries as energy sources is rapidly increasing in various fields comprising personal portable terminal and electric vehicle fields.

Unlike primary batteries, rechargeable secondary batteries are being developed not only for digital devices but also for vehicles such as electric vehicles.

Secondary batteries are variously classified according to materials and external shapes of a positive electrode and a negative electrode. Among them, since such a lithium secondary battery using a lithium compound material has large capacity and a low self-discharge rate, the lithium secondary battery is being widely used instead of a nickel-cadmium secondary battery according to the related art.

Also, the lithium secondary battery may be manufactured in various shapes. Representatively, the lithium secondary battery may be manufactured in a cylinder type, a prismatic type, or a pouch type.

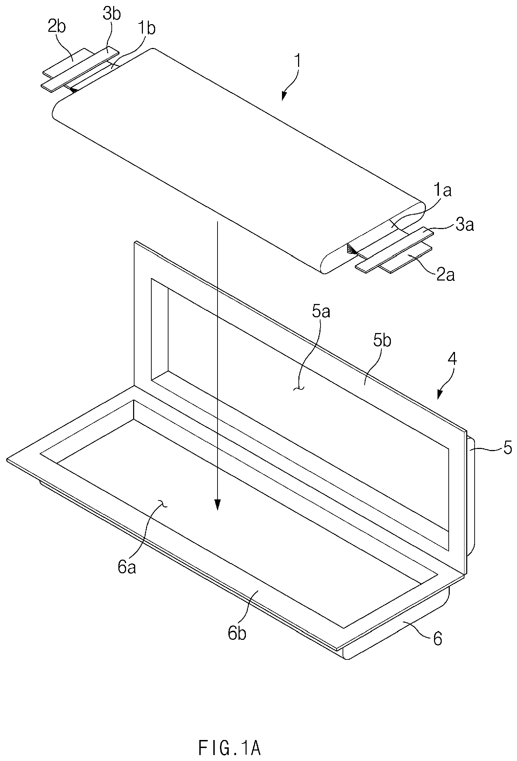

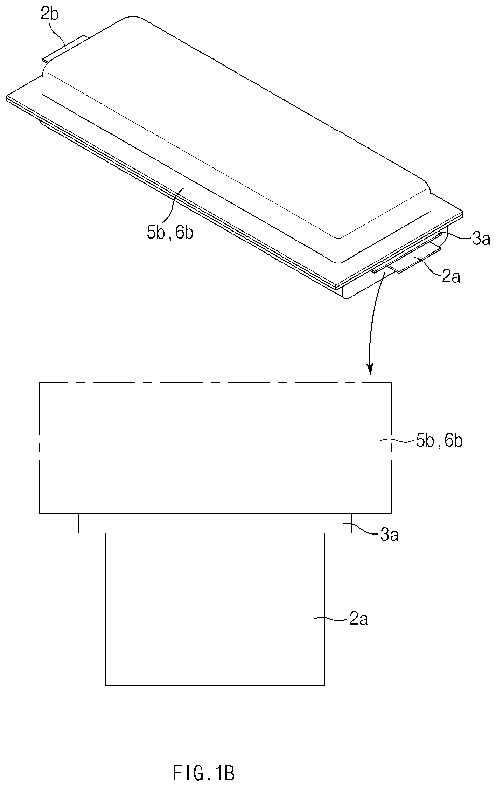

As shown in FIGS. 1a and 1b, which illustrate states before and after an electrode assembly is mounted on a pouch having a conventional structure, a pouch-type secondary battery comprises a pouch 4 and an electrode assembly 1 embedded in the pouch 4 to charge and discharge electrical energy.

The electrode assembly 1 is configured by alternately stacking a negative electrode and a positive electrode together with a separator therebetween, and electrode tabs 1a and 1b comprising a negative electrode tab protruding from the negative electrodes and a positive electrode tab protruding from the positive electrodes are welded to leads 2a and 2b at both sides of the electrode assembly 1, respectively. As illustrated in the drawing, the positive electrode tab and the negative electrode tab may be disposed on sides opposite to each other according to a method for manufacturing the positive electrode and the negative electrode.

In addition, ends of the leads 2a and 2b protrude out of the pouch 4 so as to be electrically connected to an external device.

The pouch 4 is divided into an upper portion 5 and a lower portion 6, which are capable of accommodating the electrode assembly 1 by covering one side and the other side of the electrode assembly 1 and is provided in a structure in which the upper portion 5 and lower portion 6 are connected to each other at one side.

Recessed grooves 5a and 6a are formed in the upper portion 5 and the lower portion 6 of the pouch 4 to accommodate the electrode assembly 1, respectively, and each of edges 5b and 6b of the grooves 5a and 6a are formed to be flat along a circumference of the pouch 4. Thus, after the electrode assembly 1 is mounted, when the upper portion 5 and the lower portion 6 of the pouch 4 are closed, the edges 5b and 6b of the upper portion 5 and the lower portion 6 are in contact with each other, and in this state, thermal fusion is performed by applying heat and a pressure to form a sealing part.

Here, when the electrode assembly 1 is mounted, one end of each of the leads 2a and 2b protrudes out of the pouch 4 to prevent the sealing performance of the pouch 4 from being deteriorated, and simultaneously, lead films 3a and 3b are mounted in a state of being attached to leads 2a and 2b so as to secure electrical insulation.

As the secondary battery increases in capacity and is miniaturized, the edges 5b and 6b forming the sealing part of the pouch 4 tend to be gradually reduced in size. Thus, there is a problem that sealing strength is lowered, and in particular, when the sealing strength is lowered, there is a possibility that electrolyte leakage or the like occurs in the portion from which each of the leads 2a and 2b protrudes.

Prior art relevant to the present invention is given by KR 101 308 242 B1 and KR 2017 0013809 A.

KR 101 308 242 B1 relates to a pouch-type secondary battery comprising a pouch sealed along outer edges and an electrode assembly accommodated inside the pouch.

KR 2017 0013809 A relates to a battery case with a sealed edge portion that houses an electrode assembly.

### DISCLOSURE OF THE INVENTION

### TECHNICAL PROBLEM

Therefore, a main object of the present invention is to provide a secondary battery capable of increasing in sealing strength of the pouch at a portion, from which a lead protrudes, and a method for manufacturing the same.

### TECHNICAL SOLUTION

In order to achieve the above-described object, a method for manufacturing a secondary battery, in which an electrode assembly is embedded in a pouch, and a lead electrically connected to the electrode assembly has one side protruding to the outside of the pouch, provided in the present invention comprises: a pouch providing process of providing the pouch, which has an inner space, in which the electrode assembly is embedded, and in which sealing is performed along an edge, wherein an expansion part protrudes from a position at which a lead having one end connected to the electrode assembly and the other end protruding to the outside is seated; and a sealing process of applying heat along an edge of the pouch to seal the pouch in a state in which the electrode assembly and the lead are mounted in the pouch, and the pouch is closed, wherein, in the sealing process, the sealing is performed so that the expansion part is bonded to the lead.

The lead is mounted together with a lead film, and when the sealing of the expansion part is performed, the expansion part is thermally fused to the lead film, and the lead film is thermally fused to a surface of the lead.

The lead film has an area dimensioned so as to cover the entire expansion part. The lead film may have a width greater than that of the lead.

A protruding length of the expansion part from one side of the pouch, in which the expansion part is formed, may be less than 50% of a protruding length of the lead from one side of the pouch, in which the expansion part is formed.

A secondary battery, in which an electrode assembly is embedded in a pouch, and a lead electrically connected to the electrode assembly has one side protruding to the outside of the pouch, and which is manufactured through the manufacturing method, according to the present invention comprises: the pouch in which the electrode assembly is embedded, and sealing is performed along an edge thereof; the lead having one end connected to the electrode assembly and the other end protruding to the outside of the pouch; and a lead film disposed between the lead and the pouch and adhering to each of the pouch and the lead when the sealing of the pouch is performed, wherein an expansion part expanded by a predetermined length along a longitudinal direction of the lead is formed on the pouch, and the lead film has an area dimensioned so as to cover the entire expansion part.

The expansion part is thermally fused to the lead film, and the lead film is thermally fused to a surface of the lead.

The expansion part may have a width less than or equal to that of the lead, and the lead film may have a width greater than that of the lead.

A protruding length of the expansion part from one side of the pouch, in which the expansion part is formed, may be less than 50% of a protruding length of the lead from one side of the pouch, in which the expansion part is formed.

### ADVANTAGEOUS EFFECTS

In the present invention having the configuration as described above, since the expansion part is formed on the pouch, and the sealing area increases by the increasing area by the expansion part, the sealing performance in the portion at which the lead is disposed may be further improved, and thus, the possibility of the leakage of the electrolyte and the possibility of the damage of the lead may be further reduced.

The lead film is thermally fused to the expansion part and the lead of the pouch. Here, since the lead film has the area and width, which are greater than those of the expansion part, the effect of increasing in width of the sealed point may be expected.

### BRIEF DESCRIPTION OF THE DRAWINGS

FIG. 1a is a view illustrating a state in which an electrode assembly is mounted in a pouch having a conventional structure.
FIG. 1b is a view illustrating a state in which the electrode assembly is mounted in the pouch having the conventional structure, and then, sealing is performed, and is an enlarged view of a region, in which a lead protrudes.
FIG. 2 is a view illustrating a state before an electrode assembly is mounted in a pouch according to the present invention.
FIG. 3 is a view illustrating a state in which the electrode assembly is mounted in the pouch, and then, sealing is performed according to the present invention, and is an enlarged view of a region, in which a lead protrudes.
FIG. 4 is a plan view illustrating a region S in which sealing is performed in the secondary battery according to the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a secondary battery and a method for manufacturing the same, and more particularly, to a secondary battery, in which expansion parts 51a, 51b, 61a, and 61b are formed at portions of a pouch 40, from which leads 20a and 20b protrude, to increase in sealing area, thereby improving sealing performance, and a method for manufacturing the same. Hereinafter, embodiments according to the present invention will be described in more detail with reference to the accompanying drawings.

### First embodiment

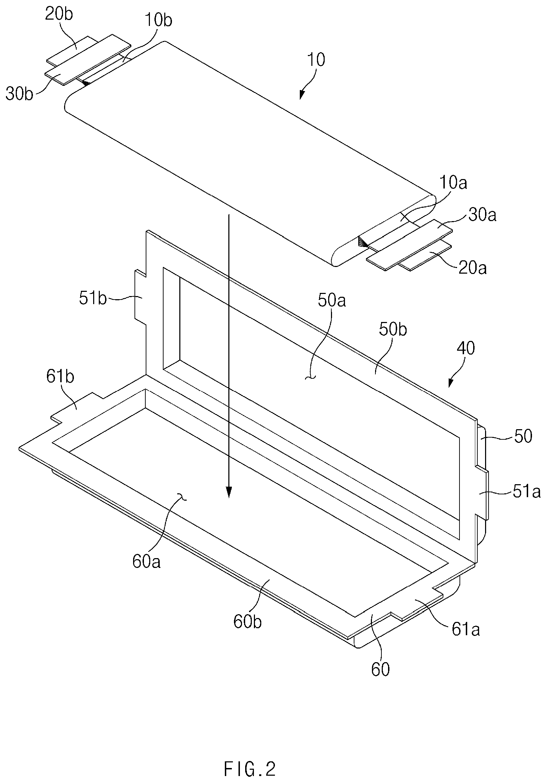

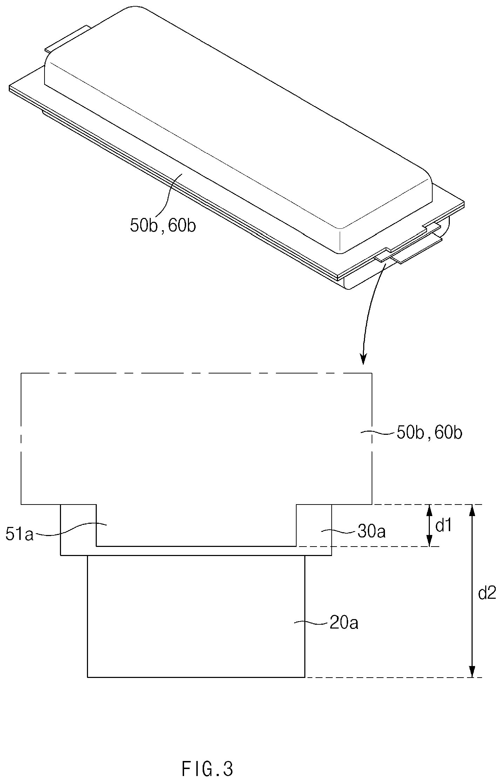

FIG. 2 is a view illustrating a state before an electrode assembly is mounted in a pouch according to the present invention, and FIG. 3 is a view illustrating a state in which the electrode assembly is mounted in the pouch, and then, sealing is performed according to the present invention, and is an enlarged view of a region, in which a lead protrudes.

Referring to FIGS. 2 and 3, a secondary battery provided in this embodiment has a structure, in which an electrode assembly 10 is embedded in a pouch 40, and one side of each of leads 20a and 20b electrically connected to the electrode assembly 10 protrudes to the outside of the pouch 40.

That is, in this embodiment, the secondary battery comprises the electrode assembly 10, the pouch 40 (50 and 60), the leads 20 (20a and 20b), and lead films 30 (30a and 30b), the pouches 40 have a structure in which expansion parts 51 and 61 (51a, 51b, 61a, and 61b) are formed.

The electrode assembly 10 is configured by alternately stacking a negative electrode and a positive electrode together with a separator therebetween, and a negative electrode tab protruding from the negative electrodes and a positive electrode tab protruding from the positive electrodes are welded to the leads 20a and 20b at both sides of the electrode assembly 10, respectively.

In addition, ends of the leads 20a and 20b are mounted in the pouch 40 so as to protrude to the outside of the pouch 40 so that the leads 20a and 20b are electrically connected to an external device. The pouch 40 is divided into an upper portion 50 and a lower portion 60, which are capable of accommodating the electrode assembly 10 by covering one side and the other side of the electrode assembly 10 and is provided in a structure in which the upper portion 50 and lower portion 60 are connected to each other at one side. Alternatively, in some cases, the upper portion 50 and lower portion 60 may be provided in a completely separated state.

Recessed grooves 50a and 60a are formed in the upper portion 50 and the lower portion 60 of the pouch 40 to accommodate the electrode assembly 10, respectively, and each of edges 50b and 60b of the grooves 50a and 60a are formed to be flat along a circumference of the pouch 40. After the electrode assembly 10 is mounted, when the upper portion 50 and the lower portion 60 of the pouch 40 are closed, the edges 50b and 60b of the upper portion 50 and the lower portion 60 are in contact with each other, and in this state, thermal fusion is performed by applying heat and a pressure to form a sealing part.

Thus, one end of each of the leads 20a and 20b is connected to the electrode assembly 10, and the other end protrudes to the outside of the pouch 40. Here, the lead films 30 (30a and 30b) are attached to sides of the leads 20, which protrude to the outside of the pouch 40, respectively. Thus, as illustrated in FIG. 3, when the sealing is performed, each of the lead films 30 is disposed between each of the leads 20 and the pouch 40 (between the edges of the pouch), and when thermal fusion is performed, one surface of each of the lead films 30 adheres to the pouch 40, and the other side of each of the lead films 30 adheres to each of the leads 20.

Furthermore, the expansion parts 51 and 61, each of which extends by a predetermined length along a longitudinal direction of the lead 20, are formed on the pouch 40. Here, the lead film 30 is formed in a size so that the entire expansion parts 51 and 61 are accommodated therein.

In the secondary battery provided in this embodiment, a width of the expansion part 51 is less than or equal to that of the lead 20, and a width of the lead film 30 is greater than that of the lead 20. The width as used herein means a length in a direction perpendicular to the longitudinal direction of the lead.

In addition, it is preferable that a protruding length d1 of each of the expansion parts 51 and 61 from one side of the pouch 40, in which the expansion parts 51 and 61 are formed, is less than 50% of a protruding length d2 of the lead 20 from one side of the pouch 40, in which the expansion parts 51 and 61 are formed.

In more detail, it is preferable that the protruding length d1 of each of the expansion parts 51 and 61 is formed within a range of 20% to 40% of the protruding length d2 of the lead 20.

When the protruding length d1 of each of the expansion parts 51 and 61 is formed to be less than 20% of the protruding length d2 of the lead 20, there is a problem in that an effect of increasing in sealing force due to the formation of the expansion parts 51 and 61 is reduced. When the protruding length d1 exceeds 40% of the protruding length d2, an exposed area of the lead 20 is covered too much, and thus, there is a possibility of occurrence of an interference when the lead 20 is electrically connected to the external device. Therefore, it is preferable to be formed within the above range in order to compromise this state.

Therefore, when the heat and pressure are applied to the pouch 40, the heat and pressure are transferred in order of the expansion parts 51 and 61, the lead film 30, and the lead 20. As a result, the expansion parts 51 and 61 are thermally fused to the lead film 30, and the lead film 30 is thermally fused to a surface of the lead 20.

### Second embodiment

Furthermore, the present invention provides a method for manufacturing a secondary battery having the above structure as a second embodiment.

The manufacturing method according to this embodiment comprises a pouch providing process and a sealing process.

In the pouch providing process, a pouch 40, which has an inner space, in which an electrode assembly 10 is embedded, and in which sealing is performed along edges 50b and 60b, is provided. Here, each of expansion parts 51 and 61 protrudes from a position at which a lead 20 having one end connected to the electrode assembly 10 and the other end protruding to the outside is seated.

The pouch 40 is manufactured by molding and cutting a raw material of the pouch 40. Here, portions of upper and lower portions 50 and 60 of the pouch 40, in which grooves 50a and 60a are formed, are processed by being pressed by a punch to deform the raw material, and portions of the edges 50b and 60b are processed by cutting the raw material to be fitted with a predetermined size. Here, when the cutting is performed to form the edges 50b and 60b of the upper portion 50 and the lower portion 60, the expansion parts 51 and 61, each of which protrudes to a predetermined size from each of the portions of the edge 50b and 60b on which the lead 20 is placed, are processed to be provided.

Also, the sealing process comprises an accommodation process of accommodating the electrode assembly 10 in the pouch 40. In the accommodation process, when the electrode assembly 10 is embedded in the pouch 40, a portion of a lead film 30 and an end of the lead 20 are accommodated so as to protrude to the expansion parts 51 and 61.

In addition, in the sealing process, in a state in which the edges 50b and 60b of the upper portion 50 and the lower portion 60 of the pouch 40 are in contact with each other, heat is applied to the edges 50b and 60b, which are in contact with each other, to perform the sealing.

While the edges 50b and 60b are sealed, the extension parts 51 and 61 are also sealed to be bonded to the lead 20.

Since the lead 20 is mounted in a state of being coupled to the lead film 30, when sealing of the expansion parts 51 and 61 is performed, the expansion parts 51 and 61 are thermally fused to the lead film 30 and, the lead film 30 is thermally fused to a surface of the lead 20.

The lead film 30 has an area dimensioned so as to cover the entire expansion parts 51 and 61. The lead film 30 has a width greater than that of the lead 20.

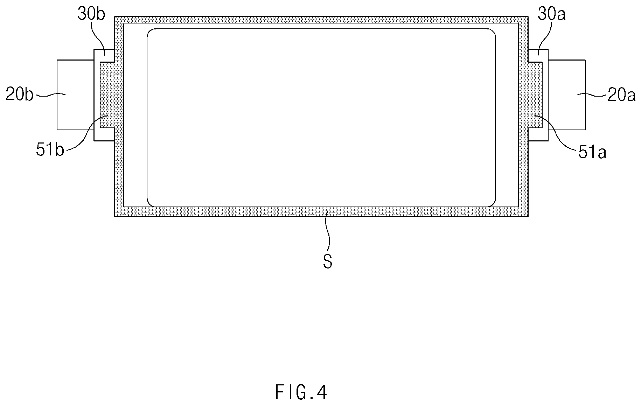

As illustrated in FIG. 4, in which a sealing region S is displayed in the secondary battery according to the present invention, in the present invention having the above-described configuration, the expansion parts 51 and 61 is formed in the pouch 40, and the sealing area may increase by the areas increasing by the expansion parts 51 and 61 to more improve the sealing performance at the portion at which the lead 20 is disposed. Therefore, possibility of leakage of an electrolyte and possibility of damage of the lead may be further reduced.

The lead film 30 may be thermally fused to the extension parts 51 and 61 and the lead 20 of the pouch 40. Here, since the lead film 30 has the area and width, which are greater than those of each of the expansion parts 51 and 61, the effect of increasing in width of the sealed point may be expected.

### [Description of the Symbols]

10: Electrode assembly
40: Pouch
50 : Upper portion of pouch
60 : Lower portion of pouch
30 (30a, 30b): Lead film
51a, 51b, 61a, 61b: Expansion part

## Claims

1. A secondary battery, in which an electrode assembly (10) is embedded in a pouch (40), and a lead (20a, 20b) electrically connected to the electrode assembly (10) has one side protruding to the outside of the pouch (40), the secondary battery comprising:
the pouch (40) in which the electrode assembly (10) is embedded, and sealing is performed along an edge (50b, 60b) thereof;
the lead (20) having one end connected to the electrode assembly (10) and the other end protruding to the outside of the pouch (40); and
a lead film (30a, 30b) disposed between the lead (20a, 20b) and the pouch (40) and adhering to each of the pouch (40) and the lead (20a, 20b) when the sealing of the pouch (40) is performed,
wherein an expansion part (51a, 51b, 61a, 61b) expanded by a predetermined length along a longitudinal direction of the lead (20a, 20b) is formed on the pouch (40), and
the lead film (30a, 30b) has an area dimensioned so as to cover the entire expansion part (51a, 51b),
wherein the expansion part (51a, 51b, 61a, 61b) is thermally fused to the lead film (30a, 30b), and the lead film (30a, 30b) is thermally fused to a surface of the lead (20a, 20b).

2. The secondary battery of claim 1, wherein the expansion part (51a, 51b, 61a, 61b) has a width less than or equal to that of the lead (20a, 20b).

3. The secondary battery of claim 2, wherein the lead film (30a, 30b) has a width greater than that of the lead (20a, 20b).

4. The secondary battery of claim 1, wherein a protruding length of the expansion part (51a, 51b, 61a, 61b) from one side of the pouch (40), in which the expansion part (51a, 51b, 61a, 61b) is formed, is less than 50% of a protruding length of the lead (20a, 20b) from one side of the pouch (40), in which the expansion part (51a, 51b, 61a, 61b) is formed.

5. A method for manufacturing a secondary battery, in which an electrode assembly (10) is embedded in a pouch (40), and a lead (20a, 20b) electrically connected to the electrode assembly (10) has one side protruding to the outside of the pouch (40), the method comprising:
a pouch providing process of providing the pouch (40), which has an inner space, in which the electrode assembly (10) is embedded, and in which sealing is performed along an edge (50b, 60b), wherein an expansion part (51a, 51b, 61a, 61b) protrudes from a position at which a lead (20a, 20b) having one end connected to the electrode assembly (10) and the other end protruding to the outside is seated; and
a sealing process of applying heat along an edge (50b, 60b) of the pouch (40) to seal the pouch (40) in a state in which the electrode assembly (10) and the lead (20a, 20b) are mounted in the pouch (40), and the pouch (40) is closed,
wherein, in the sealing process, the sealing is performed so that the expansion part (51a, 51b, 61a, 61b) is bonded to the lead (20a, 20b),
wherein the lead (20a, 20b) is mounted together with a lead film (30a, 30b), and
when the sealing of the expansion part (51a, 51b, 61a, 61b) is performed, the expansion part (51a, 51b, 61a, 61b) is thermally fused to the lead film (30a, 30b), and the lead film (30a, 30b) is thermally fused to a surface of the lead (20a, 20b), and
wherein the lead film (30a, 30b) has an area dimensioned so as to cover the entire expansion part (51a, 51b, 61a, 61b).

6. The method of claim 5, wherein the lead film (30a, 30b) has a width greater than that of the lead (20a, 20b).

7. The method of claim 5, wherein a protruding length of the expansion part (51a, 51b, 61a, 61b) from one side of the pouch (40), in which the expansion part (51a, 51b, 61a, 61b) is formed, is less than 50% of a protruding length of the lead (20a, 20b) from one side of the pouch (40), in which the expansion part (51a, 51b, 61a, 61b) is formed.

## Patentansprüche

1. Sekundärbatterie, bei der eine Elektrodenanordnung (10) in einem Pouch (40) eingebettet ist und eine Leitung (20a, 20b), die elektrisch mit der Elektrodenanordnung (10) verbunden ist, eine Seite aufweist, die von dem Pouch (40) nach außen vorsteht, wobei die Sekundärbatterie aufweist:
den Pouch (40), in dem die Elektrodenanordnung (10) aufgenommen ist und der entlang einem Rand (50b, 60b) dicht verschlossen ist;
die Leitung (20), deren eines Ende mit der Elektrodenanordnung (10) verbunden ist und deren anderes Ende von dem Pouch (40) nach außen vorsteht; und
einen Leitungsfilm (30a, 30b), der zwischen der Leitung (20a, 20b) und dem Pouch (40) angeordnet ist und an dem Pouch (40) und der Leitung (20a, 20b) haftet, wenn der Pouch (40) dicht verschlossen ist,
wobei ein Expansionsteil (51a, 51b, 61a, 61b), das um eine vorbestimmte Länge entlang einer Längsrichtung der Leitung (20a, 20b) verlängert ist, an dem Pouch (40) ausgebildet ist, und
der Leitungsfilm (30a, 30b) eine Fläche aufweist, die so bemessen ist, dass sie das gesamte Expansionsteil (51a, 51b) bedeckt,
wobei das Expansionsteil (51a, 51b, 61a, 61b) mit dem Leitungsfilm (30a, 30b) thermisch verschmolzen ist und der Leitungsfilm (30a, 30b) mit einer Oberfläche der Leitung (20a, 20b) thermisch verschmolzen ist.

2. Sekundärbatterie nach Anspruch 1, wobei das Expansionsteil (51a, 51b, 61a, 61b) eine Breite aufweist, die kleiner als oder gleich wie eine Breite der Leitung (20a, 20b) ist.

3. Sekundärbatterie nach Anspruch 2, wobei der Leitungsfilm (30a, 30b) eine Breite aufweist, die größer als eine Breite der Leitung (20a, 20b) ist.

4. Sekundärbatterie nach Anspruch 1, wobei eine vorstehende Länge des Expansionsteils (51a, 51b, 61a, 61b) von einer Seite des Pouchs (40), in der das Expansionsteil (51a, 51b, 61a, 61b) ausgebildet ist, weniger als 50 % einer vorstehenden Länge der Leitung (20a, 20b) von einer Seite des Pouchs (40), in der das Expansionsteil (51a, 51b, 61a, 61b) ausgebildet ist, beträgt.

5. Verfahren zum Herstellen einer Sekundärbatterie, bei der eine Elektrodenanordnung (10) in einem Pouch (40) aufgenomen ist und eine Leitung (20a, 20b), die elektrisch mit der Elektrodenanordnung (10) verbunden ist, eine Seite aufweist, die von dem Pouch (40) nach außen vorsteht, wobei das Verfahren umfasst:
einen Pouchbereitstellungsprozess zum Bereitstellen des Pouchs (40), der einen Innenraum aufweist, in dem die Elektrodenanordnung (10) aufgenommen ist und der entlang einem Rand (50b, 60b) dicht verschlossen ist, wobei ein Expansionsteil (51a, 51b, 61a, 61b) von einer Position vorsteht, an der eine Leitung (20a, 20b), deren eines Ende mit der Elektrodenanordnung (10) verbunden ist und deren anderes Ende nach außen vorsteht, gelagert ist; und
einen Verschlussprozess zum Anwenden von Wärme entlang einem Rand (50b, 60b) des Pouchs (40), um den Pouch (40) in einem Zustand dicht zu verschließen, in dem die Elektrodenanordnung (10) und die Leitung (20a, 20b) in dem Pouch (40) angeordnet sind und der Pouch (40) geschlossen ist,
wobei in dem Verschlussprozess das Verschließen so ausgeführt wird, dass das Expansionsteil (51a, 51b, 61a, 61b) mit der Leitung (20a, 20b) verbunden wird,
wobei die Leitung (20a, 20b) zusammen mit einem Leitungsfilm (30a, 30b) angeordnet wird, und
wenn das Verschließen des Expansionsteils (51a, 51b, 61a, 61b) ausgeführt wird, das Expansionsteil (51a, 51b, 61a, 61b) mit dem Leitungsfilm (30a, 30b) thermisch verschmolzen wird und der Leitungsfilm (30a, 30b) mit einer Oberfläche der Leitung (20a, 20b) thermisch verschmolzen wird, und
wobei der Leitungsfilm (30a, 30b) eine Fläche aufweist, die so bemessen ist, dass sie das gesamte Expansionsteil (51a, 51b, 61a, 61b) bedeckt.

6. Verfahren nach Anspruch 5, wobei der Leitungsfilm (30a, 30b) eine Breite aufweist, die größer als eine Breite der Leitung (20a, 20b) ist.

7. Verfahren nach Anspruch 5, wobei eine vorstehende Länge des Expansionsteils (51a, 51b, 61a, 61b) von einer Seite des Pouchs (40), in der das Expansionsteil (51a, 51b, 61a, 61b) ausgebildet ist, weniger als 50 % einer vorstehenden Länge der Leitung (20a, 20b) von einer Seite des Pouchs (40), in der das Expansionsteil (51a, 51b, 61a, 61b) ausgebildet ist, beträgt.

## Revendications

1. Batterie secondaire dans laquelle un ensemble d'électrodes (10) est encastré dans une poche (40), et un côté d'un conducteur (20a, 20b), connecté électriquement à l'ensemble d'électrodes (10), fait saillie vers l'extérieur de la poche (40), la batterie secondaire comprenant :
la poche (40) dans laquelle est encastré l'ensemble d'électrodes (10), un scellage étant effectué le long d'un de ses bords (50b, 60b) ;
un bout du conducteur (20) étant connecté à l'ensemble d'électrodes (10), l'autre bout étant saillant vers l'extérieur de la poche (40) ; et
un film conducteur (30a, 30b) disposé entre le conducteur (20a, 20b) et la poche (40), et adhérant à chacun de la poche (40) et du conducteur (20a, 20b) lorsque l'on effectue le scellage de la poche,
une partie d'expansion (51a, 51b, 61a, 61b) allongée d'une longueur prédéterminée dans le sens longitudinal du conducteur (20a, 20b) étant formée sur la poche (40), et
la superficie du film conducteur (30a, 30b) étant dimensionnée de façon à couvrir la partie d'expansion (51a, 51b) entière,
la partie d'expansion (51a, 51b, 61a, 61b) étant thermo-soudée sur le film conducteur (30a, 30b), et le film conducteur (30a, 30b) étant thermo-soudé sur une surface du conducteur (20a, 20b).

2. Batterie secondaire selon la revendication 1, la largeur de la partie d'expansion (51a, 51b, 61a, 61b) étant inférieure ou égale à celle du conducteur (20a, 20b).

3. Batterie secondaire selon la revendication 2, la largeur du film conducteur (30a, 30b) étant supérieure à celle du conducteur (20a, 20b).

4. Batterie secondaire selon la revendication 1, une longueur saillante de la partie d'expansion (51a, 51b, 61a, 61b) depuis un côté de la poche (40), dans laquelle la partie d'expansion (51a, 51b, 61a, 61b) est formée, étant inférieure à 50% d'une longueur saillante du conducteur (20a, 20b) depuis un côté de la poche (40), dans laquelle la partie d'expansion (51a, 51b, 61a, 61b) est formée.

5. Procédé de fabrication d'une batterie secondaire, dans lequel un ensemble d'électrodes (10) est encastré dans une poche (40), et un côté d'un conducteur (20a, 20b) connecté électriquement à l'ensemble d'électrodes (10) fait saillie vers l'extérieur de la poche (40), le procédé comprenant :
un processus d'agencement comportant l'agencement de la poche (40), possédant un espace intérieur, dans lequel est encastré l'ensemble d'électrodes (10), et dans lequel un scellage est effectué le long d'un bord (50b, 60b), une partie d'expansion (51a, 51b, 61a, 61b) faisant saillie d'une position dans laquelle un bout d'un conducteur (20a, 20b) est connecté à l'ensemble d'électrodes (10), et l'autre bout fait saillie vers l'extérieur, étant calée ; et
un processus de scellage comportant l'application d'une chaleur le long d'un bord (50b, 60b) de la poche (40) pour sceller la poche (40) dans un état dans lequel l'ensemble d'électrodes (10) et le conducteur (20a, 20b) sont montés dans la poche (40), et la poche (40) est fermée,
dans lequel, au cours du processus de scellage, le scellage est effectué de sorte que la partie d'expansion (51a, 51b, 61a, 61b) est fixée sur le conducteur (20a, 20b),
le conducteur (20a, 20b) étant monté conjointement avec un film conducteur (30a, 30b), et
lors du scellage de la partie d'expansion (51a, 51b, 61a, 61b), la partie d'expansion (51a, 51b, 61a, 61b) étant thermo-soudée sur le film conducteur (30a, 30b), et le film conducteur (30a, 30b) étant thermo-soudé sur une surface du conducteur (20a, 20b), et
le film conducteur (30a, 30b) ayant une superficie dimensionnée de façon à couvrir l'intégralité de la partie d'expansion (51a, 51b, 61a, 61b).

6. Procédé selon la revendication 5, la largeur du film conducteur (30a, 30b) étant supérieure à celle du conducteur (20a, 20b).

7. Procédé selon la revendication 5, une longueur saillante de la partie d'expansion (51a, 51b, 61a, 61b) depuis un côté de la poche (40), dans laquelle la partie d'expansion (51a, 51b, 61a, 61b) est formée, étant inférieure à 50% d'une longueur saillante du conducteur (20a, 20b) depuis un côté de la poche (40), dans lequel la partie d'expansion (51a, 51b, 61a, 61b) est formée.
